# EUROPÄISCHE PATENTSCHRIFT

(11) **EP 1 632 444 B1**
(45) Veröffentlichungstag und Bekanntmachung des Hinweises auf die Patenterteilung: **08.10.2008**
(21) Anmeldenummer: 04403001.3
(22) Anmeldetag: 03.09.2004
(51) Int. Cl.: B65G 35/06

(54) **Vorrichtung zum getakteten Transport von Werkstückträgern**
Device for stepwise transport of workpiece carriers
Dispositif pour le transport pas à pas des porte-pièces

(43) Veröffentlichungstag der Anmeldung: 08.03.2006
(73) Patentinhaber: mkf Maschinen und Systeme Költzsch-Frangen GmbH, 07589 Lederhose (DE)
(72) Erfinder: Palmi, Lars, 07629 St. Gangloff (DE); Frangen, Heinz-Jürgen, 07548 Gera (DE)
(74) Vertreter: Wagner, Gerd

(56) Entgegenhaltungen:
- EP-A- 1 400 469
- WO-A1-03/004215
- DE-U- 29 924 137

## Beschreibung

Die Erfindung betrifft eine Vorrichtung zum Transport von Werkstückträgern und deren schnelle Zuführung in Montage- oder Bearbeitungsstationen. Die Werkstückträger können kontinuierlich, formschlüssig und getaktet transportiert werden, wobei ihre Größe, wie auch die Schrittgröße sowie die Länge der Transportstrecke in Abhängigkeit vom jeweiligen Anwendungsfall in weiten Grenzen wählbar sind.

Zum kontinuierlichen und getakteten Transport von Werkstückträgern sind Fördereinrichtungen bekannt, die nach dem Prinzip der einfachen Rollenkette arbeiten. Die Werkstückträger liegen dabei auf der Rollenkette und werden durch diese mittels Kraftschluss transportiert. Befindet sich die Kette in Bewegung, so laufen die drehbeweglichen Rollen der Kette nach und nach auf eine Abrollrampe auf. Dadurch werden die Rollen in eine Drehbewegung versetzt, die wiederum eine Translationsbewegung der Werkstückträger zur Folge hat.
Nach einem anderen Lösungsprinzip arbeiten Transportvorrichtungen für Werkstückträger, wie sie beispielsweise aus der DE-PS 3 224 330 und EP-PS 0 477 468 bekanntgeworden sind. Hierbei bewegt eine zylindrische Transportspindel, die um eine Achse parallel zur Förderrichtung drehbar gelagert ist und auf ihrem Umfang eine wendelförmige Transportnut aufweist, die wiederum mit einem am Werkstückträger angebrachten Nocken zusammenwirkt, als Förderelement den Werkstückträger. Dessen Geschwindigkeit wird durch die Drehgeschwindigkeit der Transportspindel und die Steigung der Nutkurve bestimmt.

Bekannt sind auch Transportvorrichtungen für Werkstückträger, die unter Ausnutzung des Prinzips des Hubbalkens arbeiten. Der Hubbalken wird über ein Koppelgetriebe angetrieben und dabei der Werkstückträger vom Transportsystem aufgehoben und an anderer, vorbestimmter Stelle wieder abgesetzt. Allerdings müssen bei diesen Vorrichtungen die Werkstückträger angehoben werden, so dass sie nicht in der Transportebene verbleiben.

Eine Vorrichtung gemäß dem Oberbegriff des Anspruchs 1 ist aus DE 299 24 137 U bekannt.

Beim Einsatz der bereits bekannten Transportvorrichtungen treten jedoch häufig beträchtliche Schwierigkeiten bei der Werkstückbearbeitung auf, weil die Werkstückträger nicht immer genügend genau geführt bzw. positioniert werden können. Außerdem ist mit der Verwendung derartiger Vorrichtungen vielfach ein erheblicher technischer Aufwand und Platzbedarf verbunden, so dass deren Anwendung schon aus diesen Gründen Grenzen gesetzt sind.

Es ist daher die Aufgabe der vorliegenden Erfindung, eine Vorrichtung zum Transport von Werkstückträgern zu schaffen, die sich durch einen einfachen und kompakten Aufbau auszeichnet und zugleich eine ausreichende Genauigkeit bei der Führung und Positionierung der Werkstückträger gewährleistet. Die erfindungsgemäße Vorrichtung soll sich außerdem durch eine leichte Zugänglichkeit der Werkstückträger auszeichnen, um dadurch die Möglichkeiten für die Bearbeitung der Werkstücke zu verbessern.

Die Lösung der vorliegenden Aufgabe erfolgt mit einer eingangs genannten Vorrichtung, bei der die Führungsbahn von zwei in einem Maschinenrahmen gehalterten, äquidistant zueinander verlaufenden Führungsschienen gebildet wird und bei der zum Transport der translatorisch bewegten Werkstückträger ein- oder zweiseitig und parallel zu einer der beiden Führungsschienen jeweils ein als Zahnriemen ausgebildeter Förderstrang vorgesehen ist, wobei die Vorrichtung dadurch gekennzeichnet ist, dass auf der verzahnungsfreien Außenseite eines jeden Zahnriemens in konstantem Abstand zueinander angeordnete Mitnehmernocken angebracht sind, welche mit an der Unterseite der Werkstückträger positionierten Mitnehmern formschlüssig in Eingriff stehen, und dass die Führung der Werkstückträger entlang der Führungsschienen über Führungsrollen erfolgt, welche beidseitig an den Werkstückträgern, auf vertikalen Achsen drehbar gelagert, angebracht sind. Dabei bildet der über Umlenkrollen geführte Förderstrang ein in sich geschlossenes Förderband mit einem Aufnahmeteil, welches um eine horizontale und quer zur Förderrichtung verlaufende Drehachse schwenkbar ist und welches zur getakteten Aufnahme der Werkstückträger Mittel zum steuerbaren Absenken und Anheben des schwenkbaren Aufnahmeteils aufweist.

Weitere Ausgestaltungen der Erfindung sind der Gegenstand von mehreren Unteransprüchen.

Die Erfindung wird nachstehend anhand eines in mehreren Abbildungen dargestellten Ausführungsbeispiels mit einem Förderstrang näher erläutert. Es zeigen
die Fig. 1 perspektivisch in Schrägansicht von oben die erfindungsgemäße Vorrichtung,
die Fig. 2 perspektivisch einen Detailausschnitt der Vorrichtung nach Fig. 1 mit dem in den Führungsschienen laufenden Werkstückträger,
die Fig. 3 ebenfalls perspektivisch und in seitlicher Ansicht in einem weiteren Detailausschnitt den Werkstückträger nach Fig. 2 im formschlüssigen Eingriff mit einem Zahnriemen,
die Fig. 4 perspektivisch ein absenkbares Aufnahmeteil des Förderstranges mit einer pneumatisch betätigten Hebeleinrichtung und
Fig. 5 das absenkbare Aufnahmeteil nach Fig. 4 mit einem Kantenschutz und Schwenklager nach Wegnahme von Teilen der Ummantelung und der Hebeleinrichtung.

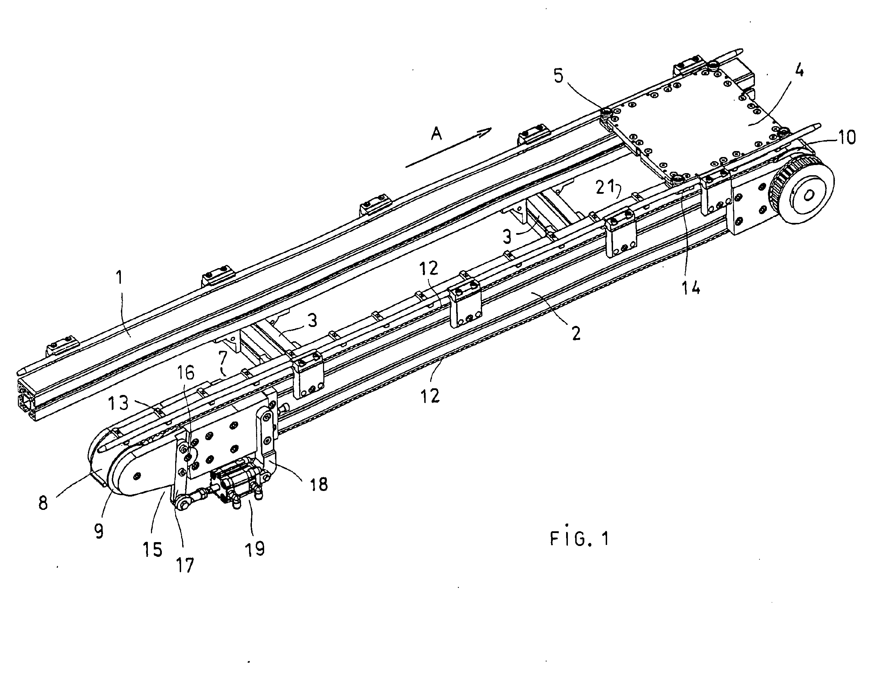

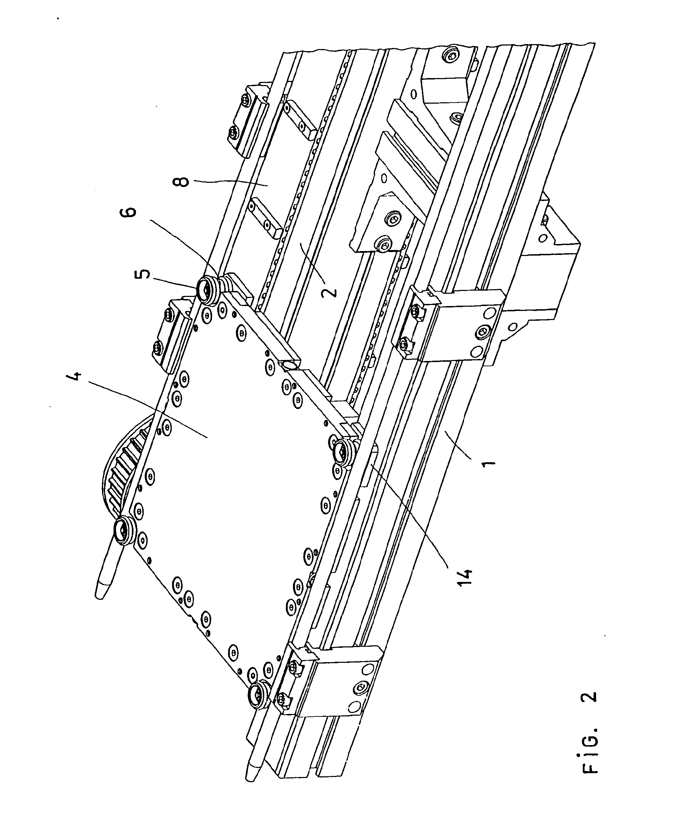

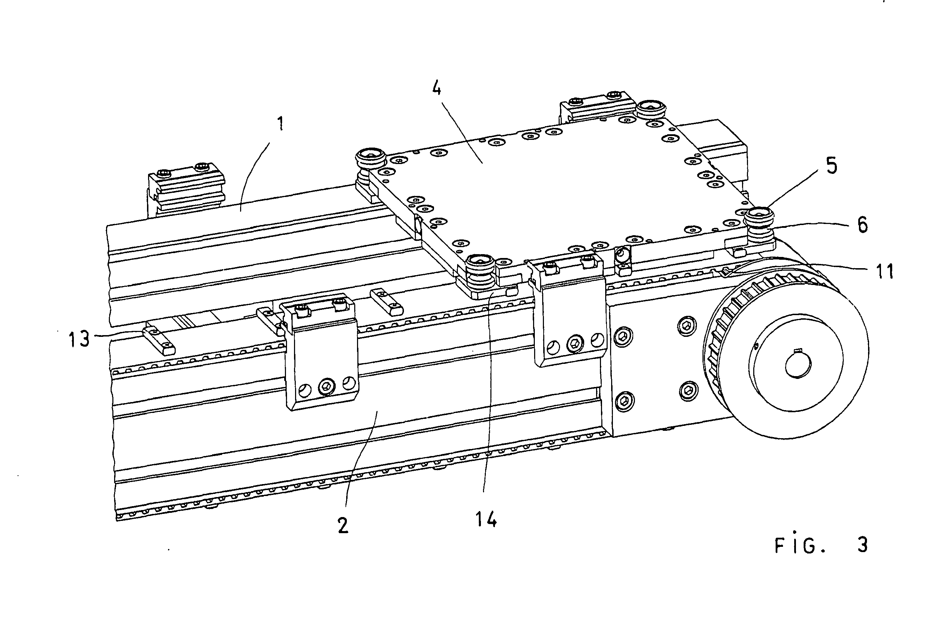

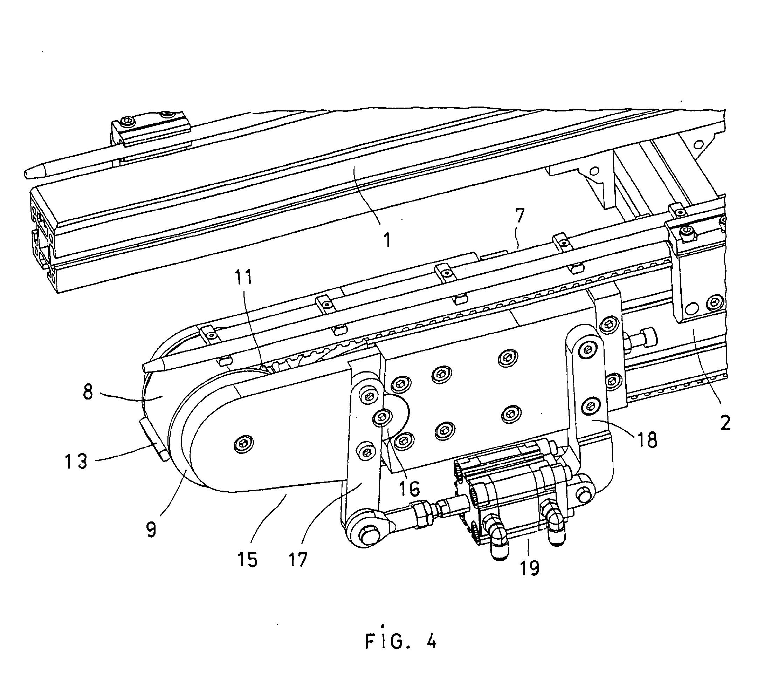

Die in Fig. 1 dargestellte Vorrichtung zum Transport von Werkstückträgern zeigt zwei parallel zueinander verlaufende Führungsschienen 1 und 2, die durch Distanzelemente 3 eines Maschinenrahmens in Abstand gehalten werden. Die Führungsschienen bilden die horizontale Führungsbahn, in die Werkstückträger 4 im Gleiteingriff nacheinander einlaufen und in Förderrichtung, angezeigt durch einen Pfeil A, zu den verschiedenen Bearbeitungs- bzw. Montagestationen transportiert werden. Je nach Größe der Transportvorrichtung und dem Platzbedarf der Werkstückträger kann eine unterschiedliche Anzahl von Werkstücken eingeführt und auch in mehreren Stationen gleichzeitig bearbeitet werden. Infolge der genauen Bearbeitung der Führungsschienen und der Werkstückträger können diese hochgenau geführt und spielfrei gehaltert werden. Zusätlich sind an den Ecken eines jeden Werkstückträgers 4 Führungsrollen 5 vorgesehen, die auf zur Führungsbahn vertikalen Achsen drehbar gelagert sind und auf ihrem Rollenumfang eine nutförmige Ausnehmung 6 für den Eingriff der Führungsschienen 1 und 2 besitzen (Fig. 2). Die exakte Horizontalführung der Werkstückträger 4 lässt sich dadurch noch verbessern. Für den Transport der Werkstückträger ist mindestens ein Förderstrang 7 mit einem Zahnriemen 8 vorgesehen, der als endloses Band über Umlenkrollen 9 und 10 geführt wird. Der Förderstrang ist einseitig und benachbart der Führungsschiene 2 angeordnet und verläuft zu dieser geradlinig und parallel in Transportrichtung. Die Umlenkrollen besitzen eine Aussenverzahnung 11, die wiederum in eine innenseitige Verzahnung 12 des Zahnriemens 8 eingreift und bei Rotation der Umlenkrollen um ihre Horizontalachse deren Drehbewegung in die translatorische Vorschubbewegung des Zahnriemens umsetzt (Fig.3 und 4). Zum Antrieb des Zahnriemens ist die Umlenkrolle 10 über eine Übersetzungseinrichtung mit einem Antriebsmotor - hier nicht dargestellt - gekoppelt.
Auf dem Zahnriemen 8 sind aussenseitig umlaufend und im gleichmäßigen Abstand zueinander Mitnehmernocken 13 angebracht, die zum Eingriff von am Werkstückträger 4 angeordneten Mitnehmern 14 vorgesehen sind. Die Mitnehmer befinden sich jeweils an den Ecken der Werkstückträger. Sie sollen gewährleisten, dass sich bei der Bewegung des Förderstranges infolge des gegenseitigen formschlüssigen Eingriffes von Mitnehmernocken und Mitnehmer die Werkstückträger 4 zwischen den Führungsschienen 1 und 2 exakt und ohne Schlupf mitbewegen können (Fig.3).
Zur Aufnahme der in Bereitstellungsposition befindlichen Werkstückträger und deren Weitertransport in die Bearbeitungspositionen ist der Förderstrang 7 aufnahmeseitig als ein schwenkbares Aufnahmeteil 15 ausgebildet. Es ist über ein Drehgelenk 16 mit dem geradlinigen starren Abschnitt 21 des Förderstranges verbunden. Dadurch wird das Aufnahmeteil 15, zusammen mit der Umlenkrolle 9 und dem darüber geführten Teil des Zahnriemens 8 in der Weise um eine quer zur Transportrichtung gelegene horizontale Achse drehbeweglich, dass ein zuvor in Richtung des Drehpfeils B (Fig. 4)abgesenktes Aufnahmeteil 15 einen zur Übergabe positionierten Werkstückträger an seiner Unterseite unterfasst und, beim Zurückschwenken des Aufnahmeteils in die Ausgangsposition, der Mitnehmernocken 13 des Zahnriemens mit dem Mitnehmer 14 des Werkstückträgers 4 formschlüssig in Eingriff gelangt. Setzt sich danach der Zahnriemen in Bewegung, zieht der Mitnehmernocken den Werkstückträger vollständig auf die Führungsbahn zwischen den beiden Führungsschienen 1 und 2. Dabei kommt auch der benachbarte Mitnehmernocken in Eingriff mit den übrigen Mitnehmern des Werkstückträgers und sichert damit dessen exakte Positionierung entlang der Führungsschienen. In einem weiteren Takt schwenkt das Aufnahmeteil 15 wiederum nach unten und der zuvor beschriebene Vorgang zum Einzug des nächst folgenden Werkstückträgers wiederholt sich. In vorbestimmter Taktfolge lassen sich auf diese Weise die Werkstückträger in formschlüssiger Führung den jeweiligen Bearbeitungsstationen zuführen.

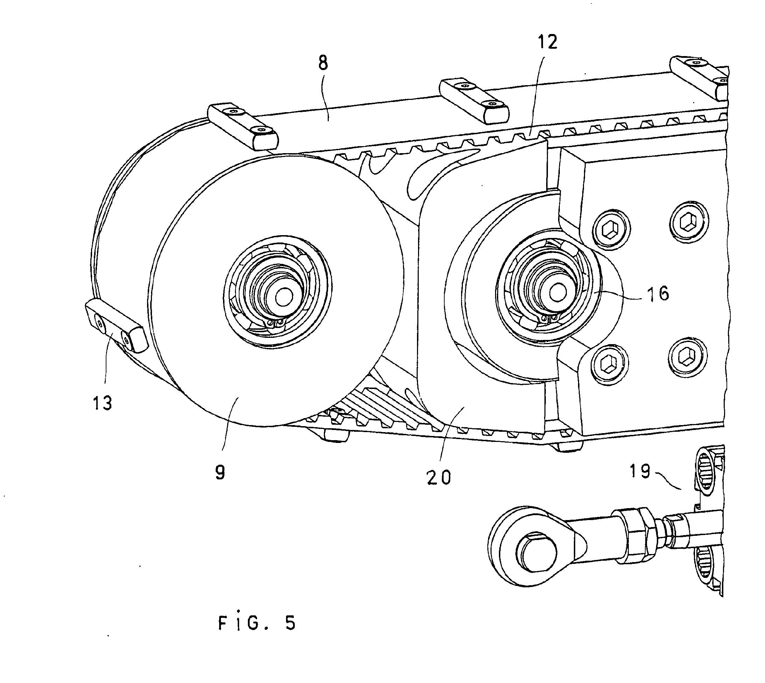

Die Schwenkbewegungen des Aufnahmeteils 15 erfolgen vermittels einer Hebeleinrichtung 17, die durch einen mit einem Gegenlager 18 gekoppelten Pneumatikzylinder 19 betätigt wird (Fig.4).
Das Drehgelenk 16 besitzt ein Radialkugellager. Dadurch ist eine Leichtgängigkeit des Gelenks bei gleichzeitiger Spielfreiheit gegeben(Fig.5).
Um eine Abnutzung des Zahnriemens 8 beim Überstreifen von Kanten des Grundkörpers des Förderstranges 7 weitgehend zu vermeiden, ist ein Kantenschutz 20 aus gleitfähigem Kunststoffmaterial im schwenkbaren Aufnahmeteil 15 angeordnet, der, um das Drehgelenk 16 gelegt, den Zahnriemen an den gefährdeten Stellen abgleiten läßt.

Mit Hilfe der vorliegenden Erfindung gelingt es auf vorteilhafte Weise, einen formschlüssigen und daher genauen Transport der Werkstückträger über den gesamten Transportweg zu erreichen. Es wird hierbei nicht nur eine exakte Führung zwischen den Werkzeugträgern und dem Zahnriemenförderer durch das Ineinandergreifen der Mitnehmernocken 13 und den Mitnehmern 14 in Transportrichtung erreicht, sondern, durch das formschlüssige Zusammenwirken der Führungsrollen 5 mit den Führungsschienen 1 und 2, auch die genaue Positionierung der Werkstückträger in den dazu senkrechten Richtungen gewährleistet. Ungenauigkeiten, hervorgerufen z. B. durch Schlupf, lassen sich dadurch gleichfalls vermeiden.
Durch sorgfältiges Bearbeiten aller am Formschluss beteiligten mechanischen Bauteile, wie der Führungsrollen, Führungsschienen, Mitnehmernocken sowie der Mitnehmer in den Plattenecken der Werkstückträger, einschließlich einer verschleißmindernden Oberflächenhärtung mechanisch besonders beanspruchter Teile, läßt sich die Genauigkeit bei der Positionierung der zu bearbeitenden Werkstücke noch weiter erhöhen.

## Patentansprüche

1. Vorrichtung zum getakteten Transport von horizontal entlang einer Führungsbahn in Reihe hintereinander bewegten Werkstückträgern (4), wobei die Führungsbahn von zwei in einem Maschinenrahmen gehalterten, äquidistant zueinander verlaufenden Führungsschienen (1,2) gebildet wird und wobei zum Transport der translatorisch bewegten Werkstückträger ein- oder zweiseitig und parallel zu einer der beiden Führungsschienen jeweils ein als Zahnriemen (8) ausgebildeter Förderstrang vorgesehen ist, der über Umlenkrollen geführt, ein geschlossenes Förderband mit einem um eine horizontal und quer zur Förderrichtung verlaufende Drehachse schwenkbaren Aufnahmeteil für die Werkstückträger (4) bildet,
**dadurch gekennzeichnet,**
**dass** auf der verzahnungsfreien Außenseite eines jeden Zahnriemens (8) in konstantem Abstand zueinander angeordnete Mitnehmernocken (13) angebracht sind, welche mit an der Unterseite der Werkstückträger (4) positionierten Mitnehmern (14) formschlüssig in Eingriff stehen, und dass die Führung der Werkstückträger entlang der Führungsschienen (1,2) über Führungsrollen (5) erfolgt, welche beidseitig an den Werkstückträgern, auf vertikalen Achsen drehbar gelagert, angebracht sind.

2. Vorrichtung zum getakteten Transport nach Anspruch 1,
**dadurch gekennzeichnet,**
**dass** die Umlenkrollen (9, 10) eine Außenverzahnung (11) besitzen, die mit einer innenseitigen Verzahnung (12) des Förderstranges (7) im Eingriff steht.

3. Vorrichtung zum getakteten Transport nach Anspruch 1,
**dadurch gekennzeichnet,**
**dass** eine angetriebene Ubersetzungseinrichtung eine der beiden Umlenkrollen (9, 10) in Drehbewegung versetzt und **dadurch** den Förderstrang (7) antreibt.

4. Vorrichtung zum getakteten Transport nach Anspruch 1,
**dadurch gekennzeichnet,**
**dass** die Führungsrollen (5) des Werkstückträgers (4) auf ihrem Rollenumfang eine nutförmige Ausnehmung (6) für den Eingriff der Führungsschienen besitzen.

5. Vorrichtung zum getakteten Transport nach Anspruch 1,
**dadurch gekennzeichnet,**
**dass** deren mechanisch besonders beanspruchte Teile oberflächengehärtet sind.

## Claims

1. Device for a fixed-cycle transport of work piece carriers (4) which are horizontally moved in series one after the other along a guideway, whereby the guideway is formed by two guide bars (1, 2) which run equidistantly to one another and which are mounted in a machine frame and whereby, in order to transport the translatorily moved work pieces, a conveyer strand is provided, one to each guide bar, in the form of a toothed belt (8), which is arranged on one and two, respectively, side/s and in parallel to one of the two guide bars, said toothed belt, being directed via deviating rollers, constitutes a closed conveyor belt with a receiving part for the work piece carrier (4) pivotally about an axis of rotation which is arranged horizontally and transversally to the direction of transport,
**characterized in that**
driver cams (13) are provided, equally spaced from one another, on the tooth free outside of each toothed belt (8), said driver cams are positively engaged with engaging pieces (14) which are positioned at the bottom side of the work piece carrier (4), and **in that** the guidance of the work piece carriers along guide bars (1, 2) is carried out via guide rollers (5) which are, seated for rotation on vertical axes, attached to both sides of the work piece carriers.

2. Device for a fixed cycle transport as claimed in claim 1, **characterized in that** the deviating rollers (9, 10) have an external toothing (11) which meshes with a toothing (12) on the inner side of the conveyor strand (7).

3. Device for a fixed cycle transport as claimed in claim 1, **characterized in that** a driven transmission gearing device transmits rotational movements to one of the two deviating rollers (9, 10) and thus drives on the conveyor strand (7).

4. Device for a fixed cycle transport as claimed in claim 1, **characterized in that** the guide rollers (5) of the work piece carrier (4) are provided with a groove-shaped recess (6) on the circumference of the rollers, being adapted for meshing the guide ways.

5. Device for a fixed cycle transport as claimed in claim 1, **characterized in that** the device parts being mechanically particulary stressed are surface hardened.

## Revendications

1. Dispositif de transport cadencé de porte-pièces (4) déplacés en ligne les uns derrières les autres horizontalement le long d'une glissière, ladite glissière étant constituée par deux rails de guidage (1, 2) maintenus dans un bâti et s'étendant à distance égale l'un par rapport à l'autre, et, pour transporter les porte-pièces déplacés en translation, un brin de transport réalisé comme courroie dentée (8) étant prévu respectivement d'un seul côté ou des deux côtés et parallèlement à l'un des deux rails de guidage, ledit brin de transport qui passe sur des poulies de renvoie formant une bande transporteuse fermée comprenant une partie de réception pour les porte-pièces (4), qui est apte à pivoter autour d'un axe de rotation s'étendant horizontalement et transversalement à la direction de transport, **caractérisé par le fait que** sur la face extérieure exempte de denture de chacune des courroies dentées (8) sont montées des cames d'entraînement (13) disposées à distance constante les unes par rapport aux autres qui s'engrènent à engagement positif avec des entraîneurs (14) positionnés sur la face inférieure des porte-pièces (4), et que le guidage des porte-pièces le long des rails de guidage (1, 2) se fait par des galets de guidage (5) qui - logés à rotation sur des axes verticaux - sont montés de part et d'autre sur les porte-pièces.

2. Dispositif de transport cadencé selon la revendication 1, **caractérisé par le fait que** lesdites poulies de renvoie (9, 10) présentent une denture extérieure (11) qui s'engrène avec une denture intérieure (12) dudit brin de transport (7).

3. Dispositif de transport cadencé selon la revendication 1, **caractérisé par le fait qu'**un dispositif entraîné de transmission met en mouvement de rotation l'une des deux poulies de renvoie (9, 10) et entraîne ainsi ledit brin de transport (7).

4. Dispositif de transport cadencé selon la revendication 1, **caractérisé par le fait que** sur la circonférence desdits galets de guidage (5) du porte-pièces (4) est ménagé un évidement en forme de rainure (6) destiné à l'engagement des rails de guidage.

5. Dispositif de transport cadencé selon la revendication 1, **caractérisé par le fait que** ses éléments qui sont soumis à des efforts mécaniques élevés sont trempés superficiellement.
